# FASCICULE DE BREVET EUROPEEN

(11) **EP 0 302 783 B1**
(45) Date de publication et mention de la délivrance du brevet: **05.04.1995**
(21) Numéro de dépôt: 88402005.8
(22) Date de dépôt: 02.08.1988
(51) Int. Cl.: H02G 3/28

(54) **Procédé de réalisation d'une installation de transport d'électricité ou analogue entre un local technique et des emplacements disséminés sur un plateau, et installation ainsi réalisée**
Herstellungsverfahren einer Elektrizitätsableitungsinstallation oder ähnlichem zwischen einem technischen Raum und verteilten Stellen auf einer Baufläche und so hergestellte Installation
Realisation process of an electricity transport installation, or the like, between a technical room and disseminated locations on a platform, and installation realised thereby

(30) Priorité: 03.08.1987 FR 8711015
(43) Date de publication de la demande: 08.02.1989
(73) Titulaire: SOCIETE D'ADMINISTRATION ET DE REALISATIONS D'INVESTISSEMENTS (SARI), F-92800 PUTEAUX (FR)
(72) Inventeur: Elluin, Patrice, F-75016 Paris (FR)
(74) Mandataire: Schrimpf, Robert

(56) Documents cités:
- DE-A- 2 211 061
- FR-A- 2 050 869
- US-A- 3 166 631

## Description

La présente invention concerne un procédé de réalisation d'une installation de transport d'électricité ou analogue entre un local technique et des emplacements disséminés sur un plateau, ainsi qu'une installation réalisée par ce procédé.

De façon générale, on entendra par "électricité" aussi bien du courant électrique que des signaux électriques et par "transport" aussi bien une distribution à partir du local technique vers les emplacements disséminés qu'un envoi vers le local technique à partir de ces emplacements disséminés ; on considérera comme "analogue" à l'électricité, du point de vue de la présente invention, toute énergie transportable par câble, gaine ou tube généralement souple, telle que par exemple l'énergie lumineuse du spectre visible ou invisible, notamment mais non exclusivement sous forme de signaux modulés à usage téléphonique ou informatique, transportée par fibre ou câble optique, l'énergie mécanique transportée par transmission funiculaire sous gaine et par exemple par câble Bowden, l'énergie pneumatique ou hydraulique transportée par tube souple ; du point de vue de la présente invention, les câbles, fibres, gaines ou tubes utilisés pour transporter ces différentes énergies seront considérés comme "analogues" à des câbles de connexion électrique. Ainsi, la présente invention pourra s'appliquer aussi bien à la desserte des différents emplacements en énergie électrique, régulée ou non, à leur desserte téléphonique ou informatique, à la transmission vers le local technique, à partir des différents emplacements, d'instructions de commande de dispositifs qui se trouvent dans ce local technique ou sont commandés à partir de celui-ci comme par exemple des moyens de climatisation, d'éclairage, d'ouverture et de fermeture de store, ces exemples n'étant nullement limitatifs et n'étant destinés qu'à démontrer les larges possibilités d'application de l'invention.

Par "plateau", on entendra l'ensemble des planchers ou sols d'un même étage d'un immeuble, généralement construit sans cloisonnement et destiné à être cloisonné ultérieurement en fonction des besoins, avec possibilité de modification du cloisonnement ; par extension, on entendra également par "plateau" les murs, voiles, cloisons en principe inamovibles de cet étage de l'immeuble.

La réalisation d'une installation de transport d'électricité ou analogue sur un tel plateau, à la construction de l'immeuble, pose des problèmes spécifiques liés au fait que l'on ignore généralement, à la construction, où devront se situer les prises de courant, interrupteurs électriques, prises téléphoniques ou informatiques ou autres ; de ce fait, l'installation de transport d'électricité ou analogue que l'on réalise simultanément à la construction de l'immeuble doit offrir une grande flexibilité de branchement en fonction du cloisonnement à venir, et des modifications pouvant survenir dans ce cloisonnement.

En fonction de cet impératif, on utilise actuellement divers procédés de réalisation des installations de transport d'électricité ou analogue, généralement de façon limitée à la desserte du plateau en courant électrique.

Une technique connue consiste à prévoir, en plafond ou sous un faux plancher, un réseau fixe de desserte en courant électrique, muni de nombreuses boîtes de dérivation permettant d'effectuer ou de supprimer des branchements en fonction des besoins ; cette technique, décrite par exemple dans la demande de brevet allemand DE-A-2 211 061 en ce qui concerne un montage en plafond, est coûteuse en raison de la longueur de câble électrique qu'impose la mise en place d'un réseau suffisamment dense pour répondre aux besoins, et en raison du nombre de boîtes de dérivation qu'il est ainsi nécessaire de mettre en place ; en outre, dans le cas particulier d'un montage sous faux plancher, la nécessité de prévoir ce faux plancher entraîne pour chaque étage un surcroît de hauteur se traduisant par un sucroît des coûts de construction, par un surcroît de consommation en énergie de chauffage ou de climatisation par augmentation des déperditions en façade, puisque la surface de façade s'en trouve accrue, et par une réduction du nombre d'étages possible pour un immeuble, à hauteur maximale imposée ; en outre, l'accès aux boîtes de dérivation est parfois difficile.

Selon une autre technique connue, on assure la desserte du plateau en prévoyant une plinthe d'alimentation en électricité courant en façade et sur laquelle on peut effectuer à volonté des branchements ; cette technique offre une grande flexibilité de branchement pour ce qui est des locaux situés en premier jour, c'est-à-dire en position directement adjacente à la façade, mais son utilisation est nécessairement limitée à ce niveau ; en outre, elle est coûteuse dans la mesure où le réseau de desserte en électricité logé dans la plinthe suit nécessairement le plus long périmètre du plateau, ce qui représente une grande longueur de câblage.

On utilise également une technique consistant à disposer dans le sol du plateau des prises de courant prévues en des emplacements judicieusement choisis pour répondre à tout besoin ultérieur possible, ainsi que des fourreaux protégeant des câbles de liaison entre ces prises de courant et le local technique ; dans le cas fréquent où le sol du plateau est en un matériau coulé tel que du béton, les prises et les fourreaux sont noyés dans ce béton, les fourreaux pouvant encore être disposés sous le plafond de l'étage immédiatement inférieur ; cette technique systématique présente l'inconvénient d'être particulièrement coûteuse en raison des longueurs de câblage qu'elle implique, ainsi que de la nécessité de prévoir une protection des prises au sol pour des raisons de sécurité ; cette technique conduit en outre à un résultat peu esthétique en raison du caractère visible des prises au sol.

Une variante de cette technique, décrite dans le brevet américain US-A-3 166 631, consiste non pas à monter les prises immédiatement lors de la réalisation du plateau, mais à noyer alors dans celui-ci, réalisé en béton, des profilés rigides qui reçoivent des câbles à la façon des fourreaux précités ; ces profilés rigides présentent, de façon régulièrement répartie sur leur longueur, des appendices rapportés en forme de boîtes qui sont susceptibles d'être ouverts à travers le plateau pour permettre des connexions électriques en fonction des besoins ; cette technique conduit à un résultat plus esthétique que la technique précédemment commentée puisque seules sont visibles les connexions effectivement réalisées mais, en raison de son caractère systématique, aggravé par la rigidité des profilés qu'il est nécessaire de prévoir en grand nombre pour desservir un plateau dans son ensemble, présente l'inconvénient de nécessiter de grandes longueurs de câbles, d'où résulte un coût élevé ; cet inconvénient est d'autant plus sensible que le raccordement des profilés rigides au local technique impose aux câbles des trajets complexes, ce qui présente en outre l'inconvénient de compliquer considérablement les opérations de câblage.

Ce document doit cependant être considéré comme divulguant un procédé de réalisation d'une installation de transport d'électricité entre un local technique et des emplacements disséminés sur un plateau, mettant en oeuvre des moyens centralisés d'alimentation en électricité et/ou de réception d'électricité qui sont disposés dans le local technique et consistant à :
- dissimuler dans le plateau, lors de la réalisation de celui-ci, un nombre déterminé de boîtes fermées réparties selon un plan déterminé ainsi que des fourreaux de passage d'au moins un câble de connexion électrique, lesquels fourreaux relient lesdites boîtes au local technique,
- puis, en fonction des besoins de connexion entre un emplacement déterminé du plateau et des moyens centralisés déterminés d'alimentation en électricité et/ou de réception d'électricité, situer et ouvrir à travers le plateau celle desdites boîtes qui est la plus proche dudit emplacement déterminé pour réaliser une connexion.

On connaît par ailleurs, d'après les paragraphes 17.1 (page 252) et 17.4 (page 254) du livre "Elektro-Installation in Wohngebäuden - Handbuch für die Installationspraxis" par D. Vogt, VDE-Verlag, Berlin 1984", un procédé de réalisation d'une installation de transport d'électricité consistant à répartir de façon déterminée, dans les planchers hauts et bas et les murs d'un local, des boîtes fermées raccordées par des fourreaux respectifs, initialement vides, à un boîtier central de répartition, avant d'effectuer un câblage électrique de ces derniers. Lorsque, par la suite, des besoins différents des besoins initiaux en raccordement électrique apparaissent, on modifie les branchements au niveau du boîtier central de répartition. Ceci implique naturellement qu'un câblage approprié ait été effectué initialement, comme dans le cas d'une installation conforme aux enseignements de US-A-3 166 631, avec les mêmes inconvénients.

Le but de la présente invention est de remédier à ces inconvénients des techniques connues.

A cet effet, la présente invention propose un procédé de réalisation d'une installation de transport d'électricité ou analogue, à savoir de toute énergie transportable par câble, fibre, gaîne ou tube généralement souple, entre un local technique et des emplacements disséminés sur un plateau, ledit plateau étant considéré comme l'ensemble des planchers ou sols d'un même étage d'un immeuble et par extension les murs, voiles et cloisons en principe inamovibles de cet étage de l'immeuble, ledit procédé mettant en oeuvre des moyens centralisés d'alimentation en électricité ou analogue et/ou de réception d'électricité ou analogue qui sont disposés dans le local technique et comportant la succession des étapes consistant à :
a) dissimuler dans le plateau, lors de la réalisation de celui-ci, un nombre déterminé de boîtes fermées, mutuellement indépendantes, réparties selon un plan déterminé, librement choisi, ainsi que des fourreaux respectifs de passage d'au moins un câble de connexion électrique ou analogue, à savoir au moins un câble, une fibre, une gaîne ou un tube généralement souple, respectivement, chaque fourreau reliant l'une, respective, desdites boîtes au local technique, indépendamment des fourreaux correspondant respectivement aux autres desdites boîtes, en faisant émerger chaque fourreau du piston dans le local technique,
b) puis, au fur et à mesure de l'apparition de besoins de connexion entre un emplacement déterminé du plateau et des moyens centralisés déterminés d'alimentation en électricité ou analogue et/ou de réception d'électricité ou analogue, situer et ouvrir à travers le plateau celle desdites boîtes qui est la plus proche dudit emplacement déterminé, engager au moins un câble de connexion électrique ou analogue dans le fourreau respectivement correspondant et raccorder ledit câble ou analogue auxdits moyens centralisés déterminés d'alimentation en électricité ou analogue et/ou de réception d'électricité ou analogue, pour réaliser une connexion, en laissant chaque fourreau et chaque boîte vides du câble de connexion électrique ou analogue correspondant à un besoin de connexion entre l'emplacement respectivement associé du plateau et des moyens centralisés déterminés d'alimentation en électricité ou analogue et/ou de réception d'électricité ou analogue tant que ce besoin n'est pas apparu,
   pour réaliser une installation adaptable à des besoins respectifs, variables dans le temps, de connexion entre des emplacements du plateau et des moyens centralisés déterminés d'alimentation en électricité ou analogue et/ou de réception d'électricité ou analogue.

Le coût d'une installation ainsi réalisée est moins élevé que celui d'une installation réalisée par les techniques connues précitées dans la mesure où, pour une utilisation donnée du plateau, seuls les fourreaux associés aux boîtes les plus proches des emplacements où l'on désire effectuer des branchements sont câblés, et ceci exclusivement en fonction des besoins spécifiques à ces emplacements, c'est-à-dire par exemple uniquement en desserte téléphonique ou informatique si seule une telle desserte est nécessaire, ou exclusivement en desserte en courant électrique si seule cette desserte est nécessaire, ou encore exclusivement en télécommande de moyens situés dans le local technique ou commandés à partir de celui-ci si tels sont les besoins, un même fourreau correspondant à une même boîte pouvant d'ailleurs également être muni de câblages correspondant à plusieurs besoins ; l'installation réalisée conformément à la présente invention présente néanmoins toute flexibilité requise, en vue d'une adaptation à des besoins différents, puisqu'il est possible d'extraire un ou plusieurs câbles ou analogues d'un fourreau si les besoins correspondants ont disparu, de refermer le boîte correspondante si elle n'est plus utilisée, ou d'en ouvrir une autre pour passer les câbles ou analogues désirés dans le fourreau correspondant, en fonction des besoins ; le repérage d'une boîte en vue de son ouverture s'effectue de façon sûre si, selon un mode de mise en oeuvre préféré de la présente invention, chaque boîte présente des dimensions supérieures aux tolérances de positionnement dans le plateau ; ainsi, dans le cas où le plateau est en un matériau coulé tel que du béton et où l'on dissimule les boîtes fermées dans le plateau en les noyant, de même que les fourreaux, dans ce matériau lors de sa coulée, il est apparu que l'utilisation dans le sol du plateau de boîtes cylindriques de révolution autour d'un axe vertical, avec un diamètre de 18 cm, permettrait de détecter à coup sûr chaque boîte repérée sur plan, en dépit des imprécisions possibles de positionnement et des déplacements possibles lors de la coulée du matériau tel que du béton.

On remarquera que lorsque l'on met en oeuvre la présente invention, non seulement le positionnement de chaque boîte sur le plateau est connu, avec certaines tolérances, mais également la longueur de chaque fourreau entre la boîte correspondante et le local technique est connue avec certaines tolérances ; de ce fait, avant d'engager un câble de connexion électrique ou analogue dans un fourreau déterminé, on peut, selon un mode de mise en oeuvre préféré de la présente invention, préfabriquer ce câble ou analogue à une longueur supérieure, d'une valeur déterminée, à la longueur déterminée du fourreau en équipant ce câble ou analogue de moyens de connexion notamment avec les moyens correspondants d'alimentation en électricité ou analogue et/ou de réception d'électricité ou analogue, préalablement à l'engagement de ce câble ou analogue dans le fourreau ; la préfabrication du câble ou analogue peut s'effectuer en usine, dans des conditions optimales de coût et de sécurité ; elle permet en outre, par un choix approprié de ladite valeur déterminée, d'éviter les chutes de câble ou analogue parfois importantes que l'on encourt nécessairement avec les techniques traditionnelles de câblage de fourreaux, selon lesquelles on prévoit par sécurité un important excédent de longueur de câble ou analogue que l'on coupe après le câblage ; naturellement, le câble ou analogue est de préférence ainsi prééquipé de moyens de connexion à ses deux extrémités.

On remarquera que, dans la mesure où chaque fourreau peut relier la boîte correspondante au local technique en suivant le trajet le plus court, c'est-à-dire généralement un trajet rectiligne, chaque fourreau présente une longueur minimale si bien qu'il en est de même pour chaque câble ou analogue, ce qui correspond à une économie supplémentaire.

De plus, en pouvant choisir librement le plan selon lequel on répartit les boîtes sur le plateau, grâce à leur indépendance mutuelle, on peut tenir compte, dans ce choix, de plus ou moins grandes probabilités de besoins de connexion selon les emplacements du plateau et prévoir, par exemple, une plus grande densité de boîtes dans certaines zones du plateau, destinées dès la réalisation de celui-ci à constituer ultérieurement des zones de travail, que dans d'autres zones de ce plateau, destinées à constituer ultérieurement des halls d'entrée ou des zones de loisir, par exemple.

Un avantage supplémentaire d'une installation réalisée conformément à la présente invention réside dans le fait qu'il est possible d'identifier parfaitement, à l'intérieur du local technique, les émergences respectives des fourreaux associés aux différentes boîtes ; selon un mode de mise en oeuvre préféré de la présente invention, on aligne suivant une direction déterminée les émergences desdits fourreaux dans le local technique et on réalise sous forme linéaire, suivant ladite direction déterminée, lesdits moyens d'alimentation en électricité ou analogue et/ou de réception d'électricité ou analogue en les juxtaposant auxdites émergences transversalement à ladite direction déterminée, ce qui facilite le repérage des câbles ou analogues associés à chaque fourreau, c'est-à-dire l'identification de chaque branchement à la réalisation des branchements ou des débranchements.

D'autres caractéristiques et avantages du procédé selon l'invention et d'une installation réalisée conformément à ce procédé ressortiront de la description ci-dessous, relative à un exemple non limitatif de mise en oeuvre, ainsi que des dessins annexés qui font partie intégrante de cette description.
- La figure 1 illustre, en une vue schématique, en perspective, une installation réalisée conformément à la présente invention.
- La figure 2 montre une vue du sol du plateau, en pratique une dalle en béton, en coupe par un plan vertical repéré en II-II à la figure 1, passant par deux desdites boîtes dont l'une est câblée alors que l'autre n'est pas câblée.

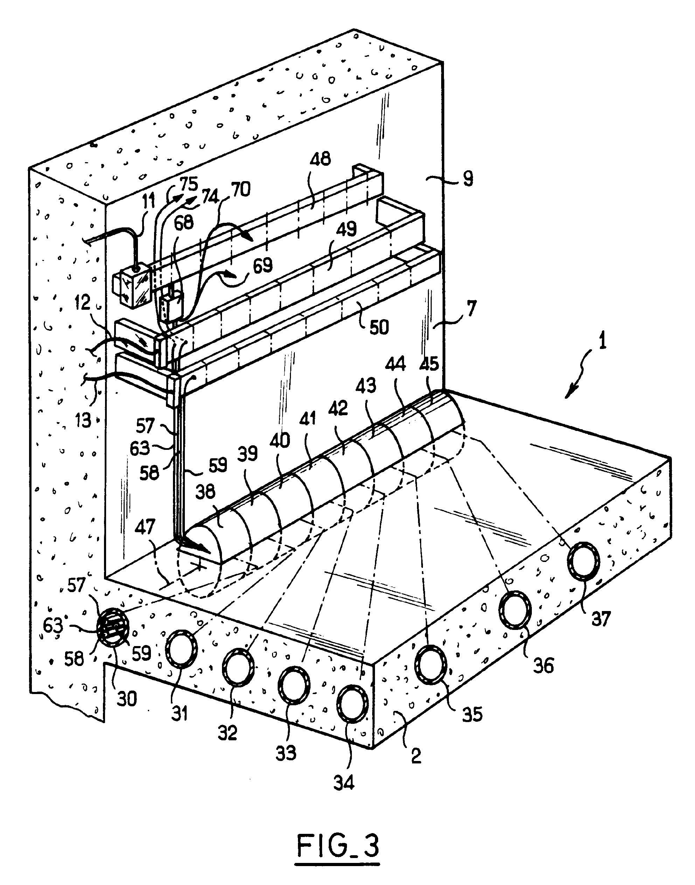

- La figure 3 montre, en une vue analogue à celle de la figure 1, un détail du local technique.
- La figure 4 montre schématiquement, en une vue en coupe par des plans verticaux repérés en IV-IV à la figure 1, les possibilités de câblage offertes par la présente invention entre une salle et le local technique.

Sur l'ensemble de ces figures, on a désigné par 1 un plateau, matérialisé par une dalle horizontale de sol 2, par exemple en béton, à laquelle est superposée une dalle horizontale de plafond 3, par exemple également en béton ; notamment la dalle de sol 2 présente une face supérieure 4, horizontale, plane, délimitée notamment en façade 5 par une périphérie 6 par exemple polygonale ; la face supérieure 4 de la dalle de sol 2 définit le sol du plateau 1.

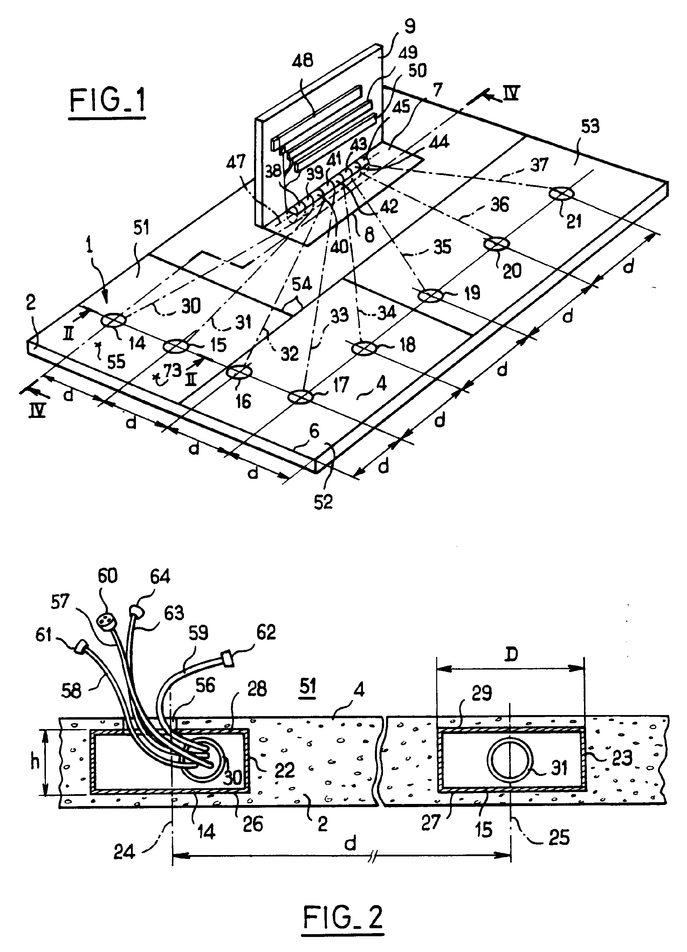

Sur ce plateau est aménagé un local technique 7 dont on a fait apparaître le contour 8 sur la face 4 (figure 1) et deux murs ou cloisons 9, 10 de séparation par rapport au reste du plateau ; dans ce local technique 7 aboutissent un câble 11 d'alimentation en énergie électrique, dans lequel sont avantageusement intercalés à l'intérieur du local technique 7 des moyens de comptage et un disjoncteur non représentés, un câble téléphonique 12 raccordé à un standard téléphonique non représenté, situé sur le plateau 1 en dehors du local technique 7 ou sur un autre plateau, et un câble 13 de liaison avec un ordinateur, non représenté, également situé sur le plateau 1 à l'extérieur du local technique 7 ou sur un autre plateau ; selon un mode de mise en oeuvre préféré de la présente invention, les câbles 11, 12, 13 se raccordent à l'intérieur du local technique 7 respectivement à une canalisation rectiligne 48 de distribution d'énergie électrique, autorisant de façon répartie sur sa longueur des branchements et débranchements à volonté et par exemple du type diffusé sous la dénomination "CANALISATIONS CANALIS KJ" par la Firme française "LA TELEMECANIQUE" (33 bis avenue du Maréchal Joffre - 92002 NANTERRE CEDEX), à un répartiteur téléphonique rectiligne 49 et à un répartiteur informatique rectiligne 50, disposés horizontalement et parallèlement entre eux et fixés dans l'exemple illustré sur le mur ou cloison 9 du local technique 7 ; le local technique 7 peut également renfermer une batterie de modules de traitement d'air comme le décrit la demande de brevet français N° 87 09630 déposée le 7 Juillet 1987 par la Demanderesse.

En vue d'autoriser de nombreuses possibilités de liaison entre un ou plusieurs des câbles 11, 12, 13 aboutissant dans le local technique 7, d'une part, et des emplacements disséminés sur le plateau 1, d'autre part, au fur et à mesure des besoins après la construction de l'immeuble dont le plateau 1 fait partie, des boîtes fermées 14 à 21, mutuellement indépendantes, prévues en un nombre déterminé et réparties selon un plan déterminé, librement choisi en fonction de besoins ultérieurs estimés, sont dissimulées dans le sol du plateau 1 et, plus précisément, noyées dans la dalle de sol 2 dans l'exemple de mise en oeuvre illustré ; comme le montre plus particulièrement la figure 2, à propos des boîtes 14 et 15, chacune de ces boîtes présente par exemple une paroi périphérique telle que 22, 23, cylindrique de révolution autour d'un axe vertical tel que respectivement 24, 25, ainsi qu'une paroi inférieure plate et horizontale telle que respectivement 26, 27 et une paroi supérieure également plate et horizontale telle que respectivement 28, 29 ; la hauteur h de chaque boîte, mesurée entre sa paroi inférieure et sa paroi supérieure, est inférieure à l'épaisseur E de la dalle de sol 2, de telle sorte que les parois supérieure et inférieure de chaque boîte soient intégralement recouvertes et dissimulées par une couche du matériau constituant la dalle de sol 2, à savoir du béton dans cet exemple ; ainsi, les différentes boîtes 14 et 21 sont invisibles, mais elles sont néanmoins faciles à localiser dans la mesure où elles sont disposées suivant un plan prédéterminé, et dans la mesure où on leur donne des dimensions horizontales supérieures aux tolérances de leur positionnement dans le sol du plateau 1 ; ainsi, dans l'exemple illustré, les boîtes 14 à 21 sont alignées parallèlement au bord périphérique 6 de la face supérieure 4 de la dalle de sol 2, à une même distance d de celui-ci et en étant elles-mêmes distantes deux à deux de cette distance d, par exemple égale à 1,30 m, d'autres dispositions pouvant également être choisies sans que l'on sorte pour autant du cadre de la présente invention dès lors qu'elles correspondent à un plan prédéterminé, restant connu après la construction du plateau 1 ; de plus, dans l'exemple illustré, la paroi périphérique extérieure telle que 23 de chaque boîte telle que 15 présente un diamètre D de l'ordre de 18 cm, étant entendu qu'un diamètre différent pourrait être choisi dès lors qu'il serait compatible avec les tolérances de positionnement des boîtes 14 à 21 dans la dalle de sol 2 du plateau 1 ; on remarquera que l'on pourrait adopter pour chacune des boîtes 14 à 21 une forme différente de celle qui a été décrite dès lors qu'elle permettrait de retrouver à coup sûr chaque boîte 14 à 21, sur plan, à travers la dalle de sol 2.

Par ailleurs, la dalle de sol 2 contient et dissimule des fourreaux 30 à 37 qui sont prévus dans l'exemple illustré en un nombre identique à celui des boîtes 14 à 21 et dont chacun relie une boîte respective au local technique 7, où il émerge de la dalle de sol 2 par la face supérieure 4 de celle-ci et par l'intermédiaire d'une boîte respective 38 à 45, identique aux boîtes 14 à 21 et partiellement noyée dans le sol, toutefois dans une position dans laquelle les axes des différentes boîtes 38 à 45 sont horizontaux et mutuellement alignés ; les boîtes 38 à 45 matérialisant les émergences des gaines 30 à 37 dans le local technique 7 sont ainsi juxtaposées mutuellement suivant un alignement horizontal 47 qui est celui de leurs axes et dans une disposition ordonnée permettant d'identifier de façon certaine chacune d'entre elles, ainsi que la boîte 14 à 21 à laquelle elle correspond ; cet alignement 47 est parallèle à la canalisation 48 de distribution d'énergie électrique et aux répartiteurs 49 et 50 qui sont superposés verticalement l'un à l'autre et aux boîtes 38 à 45, selon le mode de mise en oeuvre préféré illustré ; dans l'exemple choisi, où la dalle de sol 2 est réalisée en béton, les gaines 30 à 37 et les boîtes 38 à 45 sont noyées dans le béton simultanément aux boîtes 14 à 21, lors de la coulée de la dalle 2.

A chacune des boîtes 14 à 21 réparties sur le plateau 1 est ainsi associée une boîte respective 38 à 45, occupant une position parfaitement déterminée dans le local technique 7, et les deux boîtes ainsi associées sont raccordées entre elles par un fourreau 30 à 37 dont on remarquera qu'il est vide, c'est-à-dire démuni de tout câblage, lors de la réalisation de la dalle de sol 2 ; on remarquera que chacun des fourreaux 30 à 37 peut être disposé indépendamment de tout impératif de cloisonnement ultérieur du plateau 1, c'est-à-dire en pratique suivant une conformation aussi proche que possible de la ligne droite comme on l'a illustré à la figure 1, c'est-à-dire avec une longueur minimale qui, en outre, est connue avec une relative précision.

Les boîtes 14 à 21, les fourreaux 30 à 37, les boîtes 38 à 45, la canalisation 48 de distribution d'énergie électrique et les répartiteurs 49 et 50, avec les câbles correspondants 11, 12, 13 constituent l'infrastructure permanente d'une installation de transport d'électricité réalisée conformément à la présente invention, c'est-à-dire l'infrastructure réalisée généralement intégralement avant la livraison du plateau 1 à un utilisateur qui, ensuite, en fonction de ses besoins propres en branchement et d'un cloisonnement 54 qu'il réalise sur le plateau 1 pour le subdiviser en salles 51, 52, 53, complète cette infrastructure de la façon qui va être décrite à présent.

On s'intéressera exclusivement, à titre d'exemple non limitatif, à la salle 51 à laquelle correspondent les boîtes 14 et 15 et qui apparaît plus particulièrement aux figures 1, 2, 4, étant entendu que les salles 52 et 53, auxquelles correspondent respectivement les boîtes 17 et 18 et les boîtes 19 à 21, peuvent connaître des équipements analogues.

On supposera que dans cette salle 51, à titre d'exemple non limitatif, une alimentation en énergie électrique, une liaison téléphonique et une liaison informatique sont nécessaires en un emplacement 55 où se situe par exemple un bureau et qui, après examen du plan du plateau 1, se révèle être situé entre l'alignement des boîtes 14 et 15 et la façade 5, plus près de la boîte 14 que de la boîte 15.

Dans ces conditions, comme le montre la figure 2, on laisse la boîte 15 fermée et enveloppée par le matériau constituant la dalle de sol 2, en pratique du béton, et on laisse la gaine correspondante 31 démunie de câblage ; par contre, on situe avec autant de précision que possible la boîte 14 la plus proche de l'emplacement 55, sur la face 4 de la salle 2 puis, par cette face 4, on perce la couche du matériau constitutif de la dalle de sol 2 intercalée entre la paroi 28 de la boîte 14 et la face supérieure 4 de la dalle de sol 2, puis cette face 28 elle-même, pour ouvrir la boîte 14 vers le haut à travers le matériau de la dalle de sol 2 et avoir ainsi accès au fourreau correspondant 30 par la boîte 14 et par le trou 56 ainsi aménagé dans le matériau de la dalle de sol 2 et dans la paroi supérieure 28 de la boîte 14 ; de même, on ouvre vers le haut la boîte 38 correspondant à l'émergence du fourreau 30 au sol, dans le local technique 7.

Alors, ayant déterminé avec une certaine tolérance la longueur du fourreau 30 par lecture du plan du plateau 1, on préfabrique de préférence en usine, à une longueur correspondant à la longueur du fourreau 30 telle qu'elle apparaît sur le plan, augmentée d'une valeur déterminée, trois câbles à raison d'un câble 57 d'alimentation en électricité, un câble 58 de liaison téléphonique et un câble 59 de liaison informatique, en munissant de préférence les deux extrémités de chacun de ces câbles, lors de sa préfabrication, de moyens de connexion appropriés à raison d'un connecteur femelle, respectivement 60, 61, 62 à une extrémité de chacun des câbles, destinée à sortir du fourreau 30 par le trou 56, dans la pièce 51, et de moyens de connexion respectivement avec la canalisation de distribution d'électricité 48, avec le répartiteur 49 et avec le répartiteur 50 à l'autre extrémité, destinée à émerger du fourreau 30 dans le local technique 7 par la boîte associée 38.

Ensuite, ensemble ou séparément, on engage les trois câbles 57, 58, 59 dans le fourreau 30 et on effectue leur branchement respectivement sur la canalisation de distribution 48, sur le répartiteur 49 et sur le répartiteur 50, en un emplacement de chacun d'entre eux situé de préférence à l'aplomb ou approximativement à l'aplomb de la boîte 38 ; l'utilisateur de la salle 51 peut alors brancher sur les connecteurs 60, 61, 62 respectivement tout dispositif consommant de l'électricité, un téléphone et une console informatique ; de préférence, la longueur de chacun des câbles 57, 58 et 59 est calculée de telle sorte qu'après branchement respectivement sur la canalisation de distribution 48, le répartiteur 49 et le répartiteur 50, chacun de ces trois câbles présente un tronçon situé hors de la boîte 14 et du trou 56 à l'intérieur de la salle 51.

Naturellement, si par exemple l'utilisateur de la salle 51 n'utilise pas de console informatique, on se dispense de passer dans le fourreau 30 le câble 59 de même que, si l'utilisateur de la salle 51 vient à ne plus utiliser de console informatique après en avoir utilisé une, on peut sortir du fourreau 30 le câble correspondant 59 après l'avoir débranché du répartiteur 50, et l'on peut réutiliser ultérieurement ce câble 59 soit dans un autre fourreau présentant approximativement la même longueur que le fourreau 30, soit à nouveau dans ce fourreau 30.

De façon générale, dès lors qu'une boîte telle que 14 est ouverte, on peut insérer dans le fourreau correspondant tel que 30 ou ôter de ce fourreau tout type de câble, destiné à assurer un transport de tout type d'électricité entre la proximité de cette boîte 14 et le local technique 7.

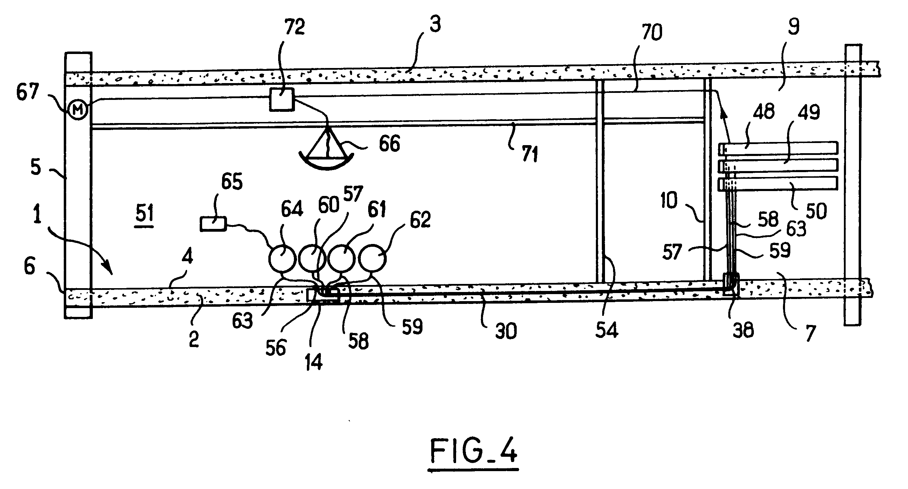

Les câbles ainsi engagés dans un fourreau tel que 30 peuvent être destinés non seulement à une alimentation en énergie électrique, à la transmission de signaux téléphoniques et à la transmission de signaux informatiques comme on l'a décrit, mais également à la transmission de courants ou signaux correspondant à d'autres fonctions et, précisément, on a illustré à la figure 2 le cas où l'on a avantageusement engagé dans le fourreau 30 un câble auxiliaire 63, muni dans la salle 51 d'un connecteur approprié 64 et destiné à permettre, à partir d'un boîtier 65 par exemple mobile, susceptible d'être posé sur un bureau à proximité de l'emplacement 55 et convenablement raccordé au câble 63, la télécommande d'un certain nombre de dispositifs tels qu'un module de traitement d'air et de climatisation associé à la salle 51 et placé dans le local technique 7 comme le décrit la demande de brevet français précitée de la Demanderesse, ou encore l'éclairage de la salle 51 comme on l'a schématisé en 66 à la figure 4 et le fonctionnement d'un moteur 67 animant un store (non représenté) de la salle 51, placé en façade 5 ; à cet effet, dans le local technique 7, le câble auxiliaire 63 se raccorde au niveau du répartiteur téléphonique 49, selon une conception du domaine des aptitudes normales d'un Homme du métier, à un câble 74 de télécommande du module de traitement d'air (non représenté) associé à la salle 51 et alimenté en électricité par un câble 69 raccordé à la conduite de distribution d'énergie électrique 48 par les mêmes moyens de connexion 68 que le câble 57, et à un câble 70 qui, revenant vers la salle 51 entre la dalle de plafond 3 et un faux plafond 71, se raccorde à l'intérieur de la salle 51, entre le faux plafond 71 et la dalle de plafond 3, à un coffret 72 de commande de l'éclairage 66 et du moteur de store 67, également alimenté en électricité par un câble 70 raccordé à la conduite 48 par les moyens de connexion 68 qui assurent ainsi à eux seuls l'alimentation de la salle 51 en énergie électrique et comportent avantageusement les moyens de protection correspondants tels qu'un disjoncteur différentiel de façon aisément concevable par un Homme du métier ; naturellement, ces exemples n'ont aucun caractère limitatif.

Lorsque, au cours du temps, l'affectation de la salle 51 change, ou lorsque le cloisonnement 54 est remplacé par un cloisonnement différent, il est possible qu'aucun besoin de transport en électricité ne se fasse plus sentir au niveau de l'emplacement 55 et qu'au contraire, un tel besoin se fasse sentir en un autre emplacement 73 quant à lui situé plus près du boîtier 15.

Alors, on extrait du fourreau 30 les câbles 57, 58, 59, 63 associés à celui-ci et l'on referme le trou 56 qui, en raison de ses faibles dimensions, peut ensuite être sans difficulté dissimulé par exemple sous un raccord de revêtement de sol ; par contre, après avoir situé sur plan le boîtier 15, on perce la couche de matériau constituant la dalle de sol 2 située entre la paroi supérieure 29 de ce boîtier 15 et la face supérieure 4 de la dalle de sol 2, ainsi que cette paroi 29 elle-même et, après avoir préfabriqué les câbles nécessaires, on peut engager ces derniers dans le fourreau 31 et les faire émerger d'une part dans la salle 51 par la boîte 15 ouverte et d'autre part dans le local technique 7 par la boîte 39, avant d'effectuer les branchements requis ; on peut effectuer les mêmes opérations au niveau de toutes les boîtes 14 à 21 réparties sur le plateau 1 et ainsi, à chaque instant, seuls sont câblés ceux des fourreaux 30 à 37 qui correspondent à une boîte 14 à 21 se situant à proximité d'un emplacement où se fait sentir un besoin de transport d'électricité, et ceci avec les seuls câbles répondant à ce besoin ainsi qu'avec une longueur aussi faible que possible de ces câbles ; une installation selon l'invention se révèle ainsi beaucoup plus économique à la réalisation qu'une installation de l'un quelconque des types connus indiqués en préambule, tout en offrant une grande flexibilité, c'est-à-dire une grande facilité d'adaptation aux besoins des utilisateurs à chaque instant.

Naturellement, l'Homme du métier comprendra que bien que l'on ait décrit uniquement des boîtes noyées dans la dalle de sol du plateau, on ne sortirait pas du cadre de la présente invention en noyant, de façon dissimulée, de telles boîtes également dans des murs, voiles, cloisons du plateau, selon un plan déterminé tel que l'on puisse les retrouver et les ouvrir en fonction des besoins ; les fourreaux correspondants, pour l'essentiel logés dans la dalle comme on l'a décrit, remonteraient par ailleurs de façon appropriée jusqu'aux boîtes dans les murs, voiles, cloisons en étant noyés dans le matériau constituant ces derniers ; de même, l'Homme de métier comprendra que bien que l'on ait décrit l'invention en référence au transport de l'électricité, on pourrait également faire passer des câbles, fibres, gaines, tubes ou autres, généralement souples, de tout type approprié à un transport d'énergie, sans sortir pour autant du cadre de la présente invention.

## Revendications

1. Procédé de réalisation d'une installation de transport d'électricité ou analogue, à savoir de toute énergie transportable par câble, fibre, gaîne ou tube généralement souple, entre un local technique (7) et des emplacements (55, 73) disséminés sur un plateau (1), ledit plateau étant considéré comme l'ensemble des planchers ou sols d'un même étage d'un immeuble et par extension les murs, voiles et cloisons en principe inamovibles de cet étage de l'immeuble, ledit procédé mettant en oeuvre des moyens centralisés (48 à 50) d'alimentation en électricité ou analogue et/ou de réception d'électricité ou analogue qui sont disposés dans le local technique et comportant la succession des étapes consistant à :
a) dissimuler dans le plateau (1), lors de la réalisation de celui-ci, un nombre déterminé de boîtes fermées (14 à 21), mutuellement indépendantes, réparties selon un plan déterminé, librement choisi, ainsi que des fourreaux respectifs (30 à 37) de passage d'au moins un câble de connexion électrique ou analogue (57 à 59, 63), à savoir au moins un câble, une fibre, une gaîne ou un tube généralement souple, respectivement, chaque fourreau (30 à 37) reliant l'une, respective, desdites boîtes (14 à 21) au local technique, indépendamment des fourreaux (30 à 37) correspondant respectivement aux autres desdites boîtes (14 à 21), en faisant émerger chaque fourreau (30 à 37) du plateau (1) dans le local technique (7),
b) puis, au fur et à mesure de l'apparition de besoins de connexion entre un emplacement déterminé (55) du plateau (1) et des moyens centralisés déterminés (48 à 50) d'alimentation en électricité ou analogue et/ou de réception d'électricité ou analogue, situer et ouvrir à travers le plateau (1) celle (14) desdites boîtes (14 à 21) qui est la plus proche dudit emplacement déterminé (55), engager au moins un câble de connexion électrique (57 à 59, 63) ou analogue dans le fourreau respectivement correspondant (30) et raccorder ledit câble (57 à 59, 63) ou analogue auxdits moyens centralisés déterminés (48 à 50) d'alimentation en électricité ou analogue et/ou de réception d'électricité ou analogue, pour réaliser une connexion, en laissant chaque fourreau (30 à 37) et chaque boîte (14 à 21) vides du câble de connexion électrique ou analogue (57 à 59, 63) correspondant à un besoin de connexion entre l'emplacement (55) respectivement associé du plateau (1) et des moyens centralisés déterminés (48 à 50) d'alimentation en électricité ou analogue et/ou de réception d'électricité ou analogue tant que ce besoin n'est pas apparu,
pour réaliser une installation adaptable à des besoins respectifs, variables dans le temps, de connexion entre des emplacements (55) du plateau (1) et des moyens centralisés déterminés (48 à 50) d'alimentation en électricité ou analogue et/ou de réception d'électricité ou analogue.

2. Procédé selon la revendication 1, caractérisé en ce que chaque boîte présente des dimensions (D) supérieures aux tolérances de positionnement dans le plateau (1).

3. Procédé selon l'une quelconque des revendications 1 et 2, le plateau (1) étant en un matériau coulé, caractérisé en ce que l'on dissimule lesdites boîtes fermées (14 à 21) dans le sol (2) du plateau (1) en les noyant, de même que lesdits fourreaux (30 à 37), dans ledit matériau lors de sa coulée.

4. Procédé selon l'une quelconque des revendications 1 à 3, chaque fourreau (30 à 37) présentant une longueur déterminée, caractérisé en ce que l'on préfabrique ledit câble (57 à 59, 63) ou analogue à une longueur supérieure, d'une valeur déterminée, à la longueur déterminée du fourreau (30) correspondant à ladite boîte (14) la plus proche dudit emplacement déterminé (55), en équipant ledit câble (57 à 59, 63) ou analogue de moyens (60 à 62, 64, 68) de connexion notamment avec lesdits moyens déterminés (48 à 50) d'alimentation en électricité ou analogue et/ou de réception d'électricité ou analogue, préalablement à l'engagement dudit câble (57 à 59, 63) ou analogue dans ledit fourreau (30).

5. Procédé selon l'une quelconque des revendications 1 à 4, caractérisé en ce que, lors de l'étape a), on fait émerger les fourreaux (30 à 37) du plateau (1), dans le local technique (7), en alignant leurs émergences (38 à 45) suivant une direction déterminée (47) et en ce qu'on réalise sous forme linéaire, suivant ladite direction déterminée (47), lesdits moyens (48 à 50) d'alimentation en électricité ou analogue et/ou de réception d'électricité ou analogue en les juxtaposant auxdites émergences (38 à 45) transversalement à ladite direction déterminée.

## Patentansprüche

1. Verfahren zum Herstellen einer Anordnung zum Transportieren elektrischer Energie oder dazu analoger Energie, nämlich jeder über ein Kabel, eine Faser, ein Hüllrohr oder ein im wesentlichen flexibles Rohr transportierbarer Energie zwischen einem technischen Raum (7) und auf einem Boden (1) verteilten Stellen (55, 73), welcher Boden als eine Anordnung von Bohlen oder Bodenplatten der gleichen Etage eines Gebäudes und im weiteren Sinne von Wänden, Schirmen und grundsätzlich fest angeordneten Zwischenwänden dieser Etage des Gebäudes angesehen wird, welches Verfahren von zentralen Einrichtungen (48 bis 50) zur Versorgung mit elektrischer oder dazu analoger Energie und/oder zum Empfang von elektrischer oder dazu analoger Energie Gebrauch macht, die in dem technischen Raum angeordnet sind, und eine Abfolge von Schritten umfaßt, die darin besteht, daß
a) in dem Boden (1) bei seiner Herstellung eine bestimmte Anzahl von voneinander unabhängigen geschlossenen Kammern (14 bis 21), die nach einem bestimmten frei wählbaren Plan verteilt sind, sowie jeweilige Hülsen (30 bis 37) zum Durchgang wenigstens eines elektrischen verbindungskabels oder einer dazu analogen Einrichtung (57 bis 59, 63), nämlich wenigstens eines Kabels, einer Faser, eines Hüllrohres oder eines im wesentlichen flexiblen Rohres jeweils verborgen werden, wobei jede Hülse (30 bis 37) jeweils eine der Kammern (14 bis 21) mit dem technischen Raum unabhängig von den Hülsen (30 bis 37) verbindet, die jeweils den anderen Kammern (24 bis 21) entsprechen, indem dafür gesorgt wird, daß jede Hülse (30 bis 37) des Bodens (1) in dem technischen Raum (7) mündet,
b) danach, je nach der auftretenden Notwendigkeit der Verbindung zwischen einer bestimmten Stelle (55) des Bodens (1) und bestimmten zentralen Einrichtungen (48 bis 50) zur Versorgung mit elektrischer Energie oder analoger Energie und/oder zum Empfang von elektrischer Energie oder analoger Energie quer durch den Boden (1) diejenige Kammer (14) der Kammern (14 bis 21) verlegt und geöffnet wird, die der bestimmten Stelle (55) am nächsten kommt, wenigstens ein elektrisches Verbindungskabel (57 bis 59, 63) oder eine analoge Einrichtung in die jeweils entsprechenden Hülse (30) eingebracht wird und dieses Kabel (57 bis 59, 63) oder die analoge Einrichtung mit den bestimmten, zentralen Einrichtungen (48 bis 50) zur Versorgung elektrischer oder analoger Energie und/oder zum Empfang elektrischer oder analoger Energie verbunden wird, um einen Anschluß zu bilden, wobei jede Hülse (30 bis 37) und jede Kammer (14 bis 21) ohne elektrisches Verbindungskabel (57 bis 59, 63) oder analoge Einrichtung entsprechend dem Anschlussbedarf zwischen der dem Boden (11) zugehörigen jeweiligen Stelle (55) und den bestimmten zentralen Einrichtungen (48 bis 50) zur Versorgung mit elektrischer oder analoger Energie und/oder zum Empfang von elektrischer oder analoger Energie gelassen wird, wenn dieser Bedarf nicht auftritt,
um eine Anordnung herzustellen, die auf den jeweiligen, zeitlich variablen Bedarf des Anschlusses zwischen den Stellen (55) des Bodens (1) und den bestimmten zentralen Einrichtungen (48 bis 50) zur Versorgung mit elektrischer oder analoger Energie und/oder zum Empfang von elektrischer oder analoger Energie anpaßbar ist.

2. Verfahren nach Anspruch 1, dadurch gekennzeichnet, daß jede Kammer Abmessungen (D) hat, die größer als die Toleranzen der Positionierung im Boden (1) sind.

3. Verfahren nach einem der Ansprüche 1 und 2, bei dem der Boden (1) aus einem gegossenen Material besteht, dadurch gekennzeichnet, daß die geschlossenen Kammern (14 bis 21) in der Bodenplatte (2) des Bodens (1) dadurch verborgen werden, daß sie genauso wie die Hülsen (30 bis 37) in diesem Material bei seinem Vergießen versenkt werden.

4. Verfahren nach einem der Ansprüche 1 bis 3, wobei jede Hülse (30 bis 37) eine bestimmte Länge hat, dadurch gekennzeichnet, dass das elektrische Verbindungskabel (57 bis 59, 63) oder die dazu analoge Einrichtung mit einer Länge hergestellt wird, die um einen bestimmten Wert größer als die bestimmte Länge der Hülse (30) ist, die der Kammer (14) entspricht, die der bestimmten Stelle (55) am nächsten liegt, das Kabel (57 bis 59, 63) oder die analoge Einrichtung mit Einrichtungen (60 bis 62, 64, 68) zur jeweiligen Verbindung mit den bestimmten Einrichtungen (48 bis 50) zur Versorgung mit elektrischer Energie oder analoger Energie und/oder zum Empfang elektrischer Energie oder analoger Energie versehen wird, bevor das Kabel (57 bis 59, 63) oder die analoge Einrichtung in die Hülse (30) eingebracht wird.

5. Verfahren nach einem der Ansprüche 1 bis 4, dadurch gekennzeichnet, daß im Schritt a) bewirkt wird, daß die Hülsen (30 bis 37) des Bodens (1) im technischen Raum (7) münden, indem ihre Mündungen (38 bis 45) in einer bestimmten Richtung (47) ausgerichtet werden, und daß in linearer Form gemäß dieser bestimmten Richtung (47) die Einrichtungen (48 bis 50) zum Versorgen mit elektrischer Energie oder analoger Energie und/oder zum Empfang von elektrischer Energie oder analoger Energie vorgesehen werden, indem diese neben den Mündungen (38 bis 45) quer zu der bestimmten Richtung angeordnet werden.

## Claims

1. Method for implementing an installation for transporting electrical or like energy, namely any energy transportable by cable, fiber, sheath or generally flexible tube, between a technical facility (7) and locations (55,73) dispersed on a platform (1), said platform being regarded as the entire floor or ground of one storey of a building and by extension the walls, curtains walls and partition walls of this storey of the building which are in principle not removable, said method using centralized transmit and/or receive means (48-50) for said electrical or like energy which are accomodated in said technical facility and comprising the succession of steps consisting in :
a) incorporating into said platform (1), during its manufacture, a predetermined number of independent closed boxes (14-21) distributed according to a specific plan chosen at will and respective ducts (30-37) for inserting at least one electrical connection cable or the like (57-59, 63), namely at least one cable, fiber,
sheath or generally flexible tube, respectively where each duct (30-37) connects a respective one of said boxes (14-21) to said technical facility independly of the other ducts (30-37), which correspond to the other boxes (14-21), respectively whilst making each duct (30-37) to emerge from the platform (1) into the technical facility (7),
b) then, as requirements for connection between a specific location (55) on said platform (1) and specific centralized electrical or like energy transmit and/or receive means (48-50) appear, determining and opening through said platform (1), which (14) box (14-21) is nearest said specific location (55), inserting into the associated duct (30) at least one electrical connection cable (57-59,63) or the like and connecting said one cable (57-59,63) or the like to said specific centralized electrical or like energy transmit and/or receive means (48-50), for achieving a connection, whilst keeping each duct (30-37) and each box (14-21) empty of the electrical connection cable or the like (57-59,63) corresponding with a need for connection between the specific associated location (55) on the platform (1) and specific centralized electrical or like energy transmit and/or receive means (48-50) as long as this need has not appeared, in order to implement an installation which can be adapted to respective needs, variable with time, for connection between locations (55) on the platform (1) and specific centralized electrical or like energy transmit and/or receive means (48-50).

2. Method according to claim 1, characterized in that the dimensions (D) of each box are greater than positional tolerances on the platform (1).

3. Method according to anyone of claims 1 and 2, wherein the said platform (1) is manufactured in a cast material, characterized in that said closed boxes (14-21) are incorporated into the floor (2) of the platform (1) by embedding them, as well as said ducts (30-37) in said material during casting thereof.

4. Method according to anyone of claims 1 to 3, wherein each duct (30-37) has a specific length, characterized in that said cable (57-59,63) or the like is prefabricated to a length exceeding by a specific amount the length of the duct (30) corresponding to said box (14) nearest said specific location (55) whilst fitting said cable (57-59,63) or the like with means (60-62,64,68) for connecting it in particular to said specific electrical or like energy transmit and/or receive means before said cable (57-59,63) or the like is inserted in said duct (30).

5. Method according to anyone claims 1 to 4, characterized in that, during step a), said ducts (30-37) are made emerge from the platform (1), into said technical facility (7), whilst aligning their emergences (38-45) along a specific direction (47) and said electrical or like energy transmit and/or receive means (48-50) are achieved with a linear form in said specific direction (47) and juxtaposed to said emergences (38-45) transversely to said specific direction.
